# FASCICULE DE BREVET EUROPEEN

(11) **EP 1 524 055 B1**
(45) Date de publication et mention de la délivrance du brevet: **22.12.2010**
(21) Numéro de dépôt: 04292379.7
(22) Date de dépôt: 06.10.2004
(51) Int. Cl.: B23B 51/00

(54) **Foret en matière céramique pour percage grande vitesse et procédé de perçage**
Keramischer Bohrer für Hochgeschwindigkeitsbohren und Bohrverfahren
Ceramics drill for high speed drilling and drilling process

(30) Priorité: 16.10.2003 FR 0312065
(43) Date de publication de la demande: 20.04.2005
(73) Titulaire: SNECMA, 75015 Paris (FR)
(72) Inventeur: Turrini, Claude, 91610 Ballancourt (FR); Martinez, Alain, 91100 Corbeil (FR); Zerrouki, Véronique, 77176 Savigny le Temple (FR)
(74) Mandataire: Ramey, Daniel

(56) Documents cités:
- EP-A- 0 936 014
- FR-A- 2 674 160
- US-A- 4 789 277
- US-A- 4 898 503
- US-A- 5 641 251

## Description

La présente invention concerne un foret en matière céramique, tel que défini dans le préambule de la revendication 1 et un procédé de perçage au moyen d'un tel foret, tel que défini dans le préambule de la revendication 17. Un tel foret et un tel procédé sont connus du document US-A-5 641 251. Elle trouve une application particulière dans le domaine de l'aéronautique pour le perçage à très grande vitesse de matériaux de grande dureté tels que des matériaux réfractaires et notamment des superalliages à base de nickel et de cobalt, par exemple de l'inconel 718, employés pour fabriquer notamment des pièces aéronautiques à bride.

Aujourd'hui, les céramiques, du fait de leur dureté importante et de leur grande résistance aux températures élevées, connaissent un développement dans la fabrication des outils de coupe. Les outils de coupe en céramique connus tels que ceux décrits dans le document EP-B1-0 477 093 et permettant d'effectuer des usinages à grande vitesse sur des matériaux de grande dureté sont généralement des outils de fraisage ou de tournage. Cependant, les contraintes pouvant s'appliquer sur un foret (profondeur de perçage, évacuation des copeaux, intensité et direction des efforts de coupe) lors d'une opération de perçage sont plus importantes que celles pouvant s'appliquer, par exemple, sur une fraise lors d'une opération de fraisage ou à un outil de tournage. Ces contraintes rendent plus difficile la mise en oeuvre de forets céramiques pour effectuer des perçages à très grandes vitesses dans des matériaux de grande dureté.

De nombreux constructeurs proposent dans leurs catalogues des forets céramiques et le document US-A- 5 641 251 décrit l'un de ces forets. Bien que ces forets soient plus performants que des forets classiques en acier rapide ou que des forets en carbure de tungstène, ils sont limités quant à leur utilisation et ne permettent pas de réaliser des perçages à très grande vitesse dans des matériaux aussi durs que des superalliages. En effet, les forets céramiques, du fait de la faible ténacité des matières céramiques, présentent une résistance plus faible à la torsion et à la compression que les forets métalliques par exemple en carbure de tungstène, ces caractéristiques mécaniques rendant les forets céramiques cassants lors de perçages dans des matériaux durs ou pour des vitesses d'avance ou de coupe du foret importantes. Des travaux ont été entrepris pour améliorer les caractéristiques mécaniques des matériaux à base de céramique : le document US-A- 4 789, 277 décrit des céramiques dans lesquelles ont été introduites des fibres (ou trichites) en carbure de silicium (SiC) pour améliorer leurs caractéristiques mécaniques. De plus, il est connu et préconisé de toujours réaliser les arêtes de coupe des forets avec des angles nuls ou négatifs pour protéger de l'usure les arêtes de coupe et augmenter la durée de vie du foret céramique.

Cependant, de tels forets ont encore un emploi limité quant aux matériaux à percer et aux vitesses et avances de coupe des forets. Lors de perçages dans des matériaux aussi durs que des matériaux réfractaires tels que des superalliages à base, par exemple, de nickel et de cobalt (dont la dureté est voisine de 440 Vickers) et lorsque les vitesses de coupe et d'avance sont très élevées, par exemple lorsque la vitesse de coupe est supérieure à environ 400 mètres/minute et lorsque que la vitesse d'avance est supérieure à 0.04 millimètre par tour, les efforts de torsion et de compression axiale générés et appliqués sur les forets de la technique antérieure sont tels que leur rupture est inévitable. De plus, les efforts de coupe exercés par de tels forets sur les pièces à percer et les frottements entre les surfaces radialement externes des forets et les surfaces cylindriques internes des perçages induisent des contraintes thermiques dans les forets et les pièces à percer qui provoquent une dégradation accélérée des forets et une déformation des pièces lorsque l'on tente d'effectuer des perçages à grande vitesse dans des matériaux de grande dureté.

En outre, au fur et à mesure que la profondeur des perçages augmente, les efforts de torsion appliqués sur les forets céramiques sont de plus en plus importants d'une part parce que la surface externe du foret frottant contre la surface cylindrique interne du perçage est de plus en plus importante mais également parce que, pour des grandes vitesses de perçage, les forets céramiques de la technique antérieure ne permettent pas d'évacuer efficacement une grande quantité de copeaux, ce qui provoque des phénomènes de bourrage dans le foret augmentant, par conséquent, les efforts de torsion appliqués sur le foret et les risques de cassure de celui-ci. Ces inconvénients interdisent généralement de percer à grande vitesse des trous dont la profondeur est supérieure au diamètre du foret.

Un but de l'invention est d'éviter les inconvénients précités et d'apporter une solution, techniquement simple et peu coûteuse, permettant d'améliorer les performances des forets céramiques et de percer à très grande vitesse des matériaux durs. L'invention propose à cet effet un foret en matière céramique selon la revendication indépendante 1 et comportant :
- une queue cylindrique,
- une partie taillée s'étendant axialement dans le prolongement de la queue et dont l'extrémité libre forme la tête du foret, la partie taillée étant en forme de tronc de cône dont la base est située du côté de la tête du foret,
la tête du foret comportant au moins deux arêtes de coupe et une arête centrale entre les deux arêtes de coupe, la partie taillée comportant deux lèvres séparées par deux goujures, les lèvres et les goujures s'étendant depuis la tête du foret vers la queue du foret, chaque lèvre comportant un listel et chaque goujure comportant une face de coupe principale adjacente à un listel et à une arête de coupe principale, au moins la partie taillée étant en matériau céramique, caractérisé en ce que :
- l'angle de coupe du foret est positif,
- une face de dépouille s'étend depuis chaque arête de coupe principale avec un angle de dépouille positif compris entre 4 et 10 degrés environ par rapport à un plan perpendiculaire à l'axe de rotation du foret,
- deux piqûres formant deux faces de coupe secondaires s'étendent depuis l'arête centrale avec un angle positif compris entre 1 et 7 degrés environ par rapport à l'axe de rotation du foret.

Dans un mode de réalisation, les lèvres et les goujures sont enroulées hélicoïdalement autour de l'axe du foret avec un angle d'hélice compris entre 20 et 30 degrés environ et de préférence entre 20 et 25 degrés environ par rapport à l'axe du foret.

Dans une autre mode de réalisation, la conicité de la partie taillée est comprise entre 1 et 5 degrés environ et de préférence entre 2 et 4 degrés environ.

Dans un autre mode de réalisation, l'épaisseur de chaque listel est inférieure au dixième environ et de préférence inférieure ou égale au vingtième environ du diamètre externe de la partie taillée.

Plusieurs avantages résultent de la combinaison des caractéristiques dimensionnelles et géométriques du foret selon l'invention.

L'un de ces avantages est de réduire considérablement les efforts de torsion et de compression appliqués au foret pour éviter la cassure ou le cisaillement de celui-ci lors de perçages grande vitesse dans des matériaux très durs tels que des superalliages à base de nickel et de cobalt. Pour réduire les efforts de torsion, sans diminuer les caractéristiques de résistance mécanique du foret, plusieurs solutions ont été adoptées, l'une d'elle résidant dans l'épaisseur des listels qui est limitée pour réduire le couple de frottement entre le foret et la paroi cylindrique interne du perçage, les listels étant les seules parties du foret en contact avec la paroi cylindrique interne du perçage. La conicité de la partie taillée du foret comprise entre 1 et 3 degrés environ permet également de réduire le couple de frottement entre le foret et la paroi du perçage, les listels étant alors en contact avec la paroi cylindrique interne du perçage seulement au voisinage de la tête du foret. Contrairement à ce qui est pratiqué pour fabriquer les forets céramiques de la technique antérieure, les angles de coupe du foret selon l'invention sont positifs, compris entre 4 et 10 degrés environ par rapport à l'axe du foret, pour diminuer les efforts de coupe et par conséquent diminuer les efforts de torsion exercés sur le foret. Dans l'art antérieur, les angles de coupe sont nuls voire négatifs pour diminuer l'usure des arêtes de coupe dans le temps. La diminution des efforts de coupe et des frottements entre le foret et les parois du perçage, permet également de diminuer l'énergie thermique dégagée au cours de l'opération de perçage et-de mettre en oeuvre un perçage à grande vitesse dans des matériaux très dur sans détérioration du foret ou de la pièce.

Les efforts de compression qui s'exercent sur le foret lors d'un perçage sont diminués par les deux piqûres formées à partir de l'arête centrale du foret céramique. Les arêtes centrales classiques sur les forets céramiques ne présentent aucun angle de coupe et représentent, par conséquent, une résistance importante au déplacement axial d'un foret. La présence des piqûres permet de modifier l'arête centrale pour que celle-ci devienne une arête de coupe comportant deux angles de coupe positifs compris entre 1 et 7 degrés environ par rapport à l'axe du foret.

Selon un mode de réalisation de l'invention et pour diminuer les risques de cassure ou de cisaillement du foret, les lèvres et les goujures ont une forme hélicoïdale permettant au foret de mieux résister aux efforts de torsion qui lui sont appliqués sans que ses autres caractéristiques de résistance mécanique soient diminuées. La forme hélicoïdale des goujures dont l'angle d'hélice est inférieur à 25 degrés permet d'assurer une bonne évacuation des copeaux quelle que soit l'importance des vitesses de coupe et pour des profondeurs de perçages pouvant être supérieures au diamètre extérieur du foret.

Contrairement à ce que l'on aurait pu craindre, les contraintes thermiques et l'altération de la matière au bord du trou restent réduites et limitées à une profondeur de quelques centaines de µm. Les copeaux produits prennent une coloration rouge en sortant du trou, ce qui indique que leur température est de l'ordre de 1000°C. On en conclut que l'énergie produite lors du perçage à grande vitesse passe majoritairement dans les copeaux et est évacuée par ceux-ci. Dans la plupart des cas, les pièces restent brutes de perçage. Par contre, dans le cas de pièces fortement sollicitées, telles les rotors de turboréacteurs, les trous sont seulement ébauchés par ce procédé et font ensuite l'objet d'une finition par les moyens conventionnels. Dans tous les cas, le perçage à grande vitesse avec le foret de l'invention est rentable.

Selon d'autres caractéristiques préférentielles de l'invention, l'angle d'hélice des goujures et des lèvres est préférentiellement compris entre 20 et 25 degrés environ, la partie taillée du foret a une conicité égale à environ 1 degré, chaque listel a une épaisseur inférieure au vingtième environ du diamètre externe du foret, une face de dépouille s'étend depuis chaque arête de coupe avec un angle inférieur à 12 degrés par rapport à un plan perpendiculaire à l'axe du foret, préférentiellement cet angle est inférieur à 8 degrés, une face de contre-dépouille peut également être formée dans le prolongement de chaque dépouille. Chaque arête de coupe du foret et le bord d'attaque de chaque listel, formant une arête d'intersection entre chaque listel et une face de coupe principale, sont arrondis avec un rayon compris entre 2 et 40 micromètres environ. Les becs des forets peuvent également comporter un chanfrein de 0,5 millimètre environ à 20 degrés environ par rapport à l'axe du foret. Ces caractéristiques additionnelles permettent de diminuer les efforts de torsion et de compression exercés sur le foret céramique. Elles permettent également de diminuer l'énergie thermique produite lors de perçages à grande vitesse tout en améliorant la dissipation de cette énergie via les copeaux.

Selon une autre caractéristique intéressante, l'angle de pointe du foret, correspondant à l'angle formé par les deux arêtes de coupe principales, est compris entre 140 et 155 degrés environ. Cette caractéristique permet l'auto-centrage du foret et, par conséquent, évite une opération de pointage pour le centrage du foret.

Selon encore d'autres caractéristiques préférentielles du foret selon l'invention :
- chaque listel a une épaisseur comprise entre 0.2 et 0.8 mm et de préférence entre 0.4 et 0.8 mm,
- la céramique est à base d'oxyde d'alumine, de zircone, de nitrure de silicium ou de céramique mixte,
- la céramique est renforcée par des fibres en carbure de silicium (SiC).
- le foret est adapté au perçage des matériaux réfractaires tels, par exemple, que des matériaux aéronautiques à base de nickel ou à base de cobalt pouvant être notamment un inconel 718 dont la dureté est de 440 Vickers (HV) environ.

L'invention propose également un procédé de perçage selon la revendication indépendante 17, au moyen d'un foret céramique du type décrit ci-dessus, caractérisé en ce que, pour des perçages à grande vitesse dans des matériaux aéronautiques réfractaires à base de cobalt et de nickel, les vitesses de coupe périphérique du foret sont comprises entre 400 et 1000 mètres par minute environ et les vitesses d'avance du foret sont comprises entre 0.04 et 0.1 millimètre par tour. Ces plages déterminent les conditions dans lesquelles il est possible d'utiliser le foret céramique selon l'invention sans risque d'usure accélérée ou de casse du foret tout en permettant une bonne évacuation des copeaux et une bonne dissipation thermique via les copeaux. Pour des conditions optimales d'utilisation, les vitesses de coupe périphérique du foret sont comprises entre 400 et 600 mètres par minute environ.

Selon d'autres caractéristiques préférentielles du procédé selon l'invention, le perçage est effectué à sec sans lubrifiant et ne nécessite pas d'opération de pointage préalable pour le centrage du foret.

L'utilisation de lubrifiant, lors d'un perçage au moyen d'un foret selon l'invention, n'est pas recommandée car elle réduit les performances du foret en terme de paramètres de coupe et de durée de vie.

Selon l'état de surface final requis, une seule opération de perçage, sans opération de pointage préalable et sans opération ultérieure de finition, est suffisante pour réaliser le trou final. Du fait de la vitesse de perçage importante et de la réduction des opérations de perçage, le foret selon l'invention permet de diminuer considérablement le temps de perçage de matériaux de grande dureté. Par rapport à des forets de la technique antérieure qui ne permettent pas d'effectuer des perçages dans des matériaux très durs à des vitesses aussi importantes que celles autorisées par le foret selon l'invention, la durée d'une opération de perçage selon l'invention est divisée par au moins 5.

Selon d'autres caractéristiques préférentielles de l'invention :
- le procédé est adapté au perçage des matériaux réfractaires tels, par exemple, que des matériaux aéronautiques à base de nickel ou à base de cobalt pouvant être notamment un inconel 718 dont la dureté est de 440 Vickers (HV) environ,
- le perçage est une opération d'ébauche.

L'invention sera mieux comprise et d'autres caractéristiques, détails et avantages de celle-ci apparaîtront plus clairement à la lecture de la description qui suit, faite à titre d'exemple en référence aux dessins annexés :
- la figure 1 est une vue de schématique de côté d'un foret selon l'invention ;
- la figure 2 est une vue schématique de dessous du foret représenté en figure 1 ;
- la figure 3 est une vue de côté d'une partie du foret de la figure 1, vue dans la direction A de la figure 2 ;
- la figure 4 est une vue de côté d'une partie du foret de la figure 1, vue dans la direction B de la figure 2.

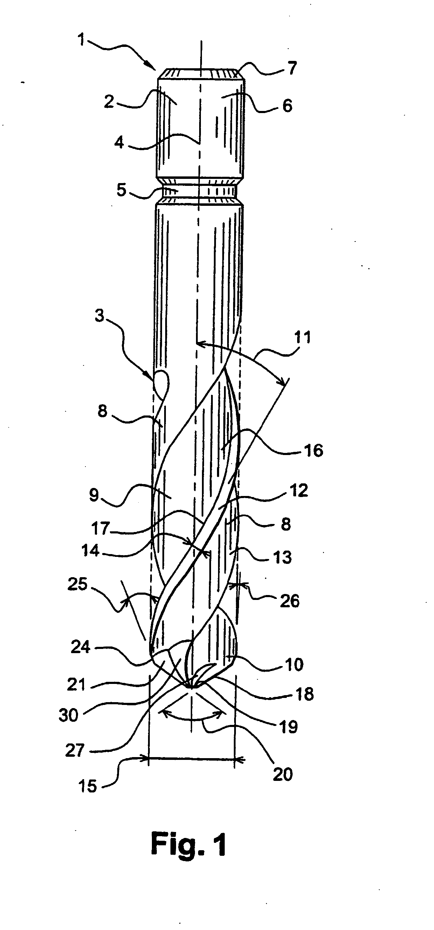

Les figures 1 à 4 représentent à titre d'exemple un foret monobloc en céramique pour perçage à grande vitesse de matériaux de très grande dureté, tels que des matériaux aéronautiques réfractaires en superalliages et notamment de l'inconel 718.

Ce foret céramique 1 comporte (figure 1) une queue cylindrique 2 et une partie taillée 3 s'étendant depuis la queue dans l'axe 4 du foret. La queue comporte une rainure annulaire 5 servant au bridage du foret dans le mandrin d'une machine-outil non représentée. L'extrémité libre 6 de la queue cylindrique axiale se termine par un chanfrein 7 pour faciliter son introduction dans le mandrin de la machine-outil.

La partie taillée 3 du foret 1 comporte deux lèvres 8 et deux goujures 9, s'étendant en alternance autour de l'axe 4 depuis l'extrémité axiale 10 du foret 1, appelée tête du foret, opposée à la queue 2. Les lèvres 8 et les goujures 9 sont enroulées hélicoïdalement autour de l'axe 4 avec un angle d'hélice 11 inférieur ou égal à 25 degrés environ.

Chaque lèvre 8 comporte un listel 12, destiné à glisser contre la paroi interne d'un trou à percer, et une surface de dégagement 13 de formes hélicoïdales. Selon l'invention, chaque listel 12 a une épaisseur 14 qui est inférieure ou égale au dixième environ du diamètre 15 de la partie taillée 3 du foret 1. Chaque goujure 9 comporte une face de coupe principale 16, adjacente à un listel 12. L'intersection du listel 12 et de la face de coupe principale 16 forme une arête appelée bord d'attaque 17 du listel 12.

Chaque listel 12 est prolongé du côté de la tête 10 du foret 1 par une arête de coupe principale 18. Les deux arêtes de coupe principales sont séparées par une arête centrale 19. L'angle de pointe 20 formé par les deux arêtes de coupe principales est compris entre 140 et 155 degrés environ. Chaque arête de coupe principale 18 est formée par une intersection entre la face de coupe principale 16 d'une goujure 9 d'une part et d'autre part une face de dépouille 21 dont l'angle est inférieur à 10 degrés environ par rapport à un plan perpendiculaire à l'axe 4 du foret. Chaque face de dépouille 18 s'étend depuis une arête de coupe principale 18 avec un angle de dépouille compris entre 4 et 10 degrés environ et de préférence entre 6 et 8 degrés environ par rapport à un plan perpendiculaire à l'axe 4 du foret 1. Un angle positif ou négatif de coupe est déterminé par l'orientation de la face de coupe 16 par rapport au sens de la coupe 23 : lorsque la face de coupe est inclinée depuis l'arête de coupe vers le sens de la coupe 23, l'angle de coupe est dit négatif et à l'inverse lorsque la face de coupe 16 est inclinée depuis l'arête de coupe dans le sens inverse de la coupe 23, l'angle de coupe 22 est dit positif.

Chaque bec 24 du foret, qui est constitué par une intersection entre une arête de coupe principale 18 et un bord d'attaque 17 du listel 12, comporte un chanfrein 25 de 0.5 millimètre environ à 20 degrés environ par rapport à l'axe 4 du foret.

La partie taillée 3 du foret 1 a une forme générale extérieure en tronc de cône. La base du tronc de cône est située au voisinage de la tête du foret 10 et la conicité 26 de la partie taillée 3 est comprise entre 1 et 3 degrés environ.

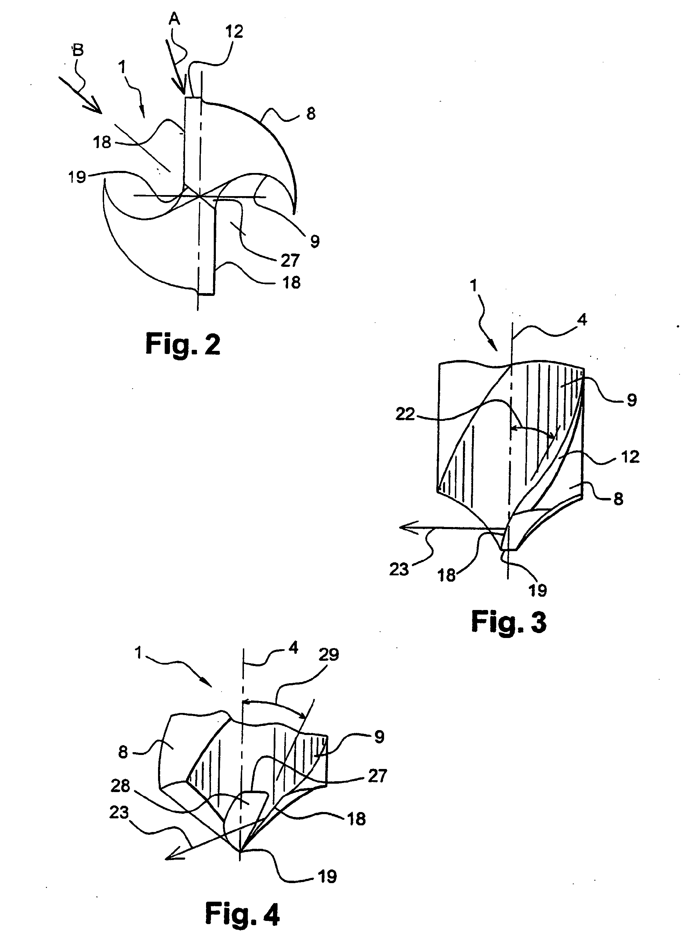

Deux faces de coupes secondaires 28, formées par la réalisation de deux piqûres 27 (figures 1, 2 et 4), s'étendent depuis l'arête centrale 19 du foret 1 avec un angle de coupe positif 29 (figure 4) compris entre 1 et 7 degrés environ par rapport à l'axe 4 du foret. L'arête centrale 19 selon l'invention comprend deux arêtes de coupe secondaires.

Les arêtes de coupe du foret 1, principales 18 et secondaires 19, et le bord d'attaque 17 de chaque listel 12 sont arrondis avec un rayon compris entre 2 et 40 micromètres.

La matière céramique constituant le foret monobloc 1 est à base d'oxyde d'alumine renforcée par des fibres en carbure de silicium (SiC).

Dans une variante de réalisation du foret 1 selon l'invention, la matière céramique peut être à base de zirconium, de nitrure de silicium ou de céramique mixte, la céramique mixte étant composée de zirconium et de nitrure de silicium, renforcée ou non par des fibres en carbure de silicium.

Dans une autre variante de réalisation, la partie taillée 3 et la queue 2 du foret 1 sont deux éléments fabriqués distinctement, constitués de matières différentes et liés entre eux, par exemple, par brasage. La partie taillée 3 du foret 1 est alors en céramique et la queue 2 du foret 1 est réalisée en un matériau de résilience supérieure à celle de la céramique pour mieux supporter les efforts appliqués sur le foret 1. Le matériau de la queue 2 du foret 1 peut par exemple être un carbure de tungstène.

Pour améliorer les performances du foret 1 selon l'invention, l'angle d'hélice 11 est préférentiellement compris entre 20 et 25 degrés environ, la partie taillée 3 a une conicité 26 égale à environ 1 degré, chaque listel 12 a une épaisseur 14 inférieure au vingtième environ du diamètre externe 15 de la partie taillée 3, chaque face de dépouille 21 a un angle inférieur à environ 8 degrés par rapport à un plan perpendiculaire à l'axe 4 du foret 1, chaque dépouille 21 peut également être prolongée par une face de contre-dépouille 30.

Dans une variante de réalisation du foret 1 selon l'invention, l'épaisseur 14 de chaque listel 12 est égale à environ 0.5 millimètre.

Le foret céramique 1 selon l'invention est particulièrement bien adapté au perçage de matériaux réfractaires tels que des matériaux aéronautiques réfractaires à base de nickel ou de cobalt appelés couramment superalliages. Il est par exemple possible de réaliser à très grande vitesse des perçages dans de l'inconel 718 dont la dureté est de 440 Vickers environ. Selon l'invention, des vitesses de coupe périphérique du foret comprises entre 400 et 1000 mètres par minute environ et des vitesses d'avance comprises entre 0.04 et 0.1 millimètre par tour environ pour réaliser des perçages dans des matériaux aussi dur que de l'inconel 718, permettent de réduire considérablement les contraintes s'exerçant sur le foret 1 qu'elles soient mécaniques, efforts de torsion et de compression, ou thermiques. Pour ces vitesses, les contraintes thermiques sont diminuées en assurant une dissipation thermique via les copeaux qui véhiculent rapidement cette énergie thermique en dehors du perçage. Pour des conditions optimales d'utilisation, les vitesses de coupe périphériques du foret sont comprises entre 400 et 600 mètres par minute environ. L'utilisation du foret en dehors des plages de vitesses préconisées entraîne une usure accélérée du foret.

Selon une autre caractéristique préférentielle de l'invention, le perçage est effectué à sec sans utilisation de lubrifiant et constitue une opération d'ébauche ne nécessitant pas d'opération de pointage préalable pour le centrage du foret.

Suivant l'état de surface final requis, une seule opération de perçage, sans opération de pointage préalable et sans opération ultérieure de finition, est suffisante pour réaliser le trou final.

## Revendications

1. Foret en matière céramique comportant :
• une queue cylindrique (2),
• une partie taillée (3) s'étendant axialement dans le prolongement de la queue (2) et dont l'extrémité libre (10) forme la tête du foret, la partie taillée (3) étant en forme de tronc de cône dont la base est située du côté de la tête (10) du foret (1),
la tête du foret (10) comportant deux arêtes de coupe principales (18) et une arête centrale (19) entre les deux arêtes de coupe principales (18), la partie taillée (3) comportant deux lèvres (8) et deux goujures (9) s'étendant en alternance autour de l'axe de rotation (4) du foret (1), les lèvres (8) et les goujures (9) s'étendant depuis la tête du foret (10) vers la queue du foret (2), chaque lèvre (8) comportant un listel (12) et chaque goujure comportant une face de coupe principale (16) adjacente à un listel (12) et à une arête de coupe principale (18), au moins la partie taillée (3) du foret (1) étant en matériau céramique, **caractérisé en ce que** :
• l'angle de coupe (22) du foret est positif,
• une face de dépouille (21) s'étend depuis chaque arête de coupe principale (18) avec un angle de dépouille compris entre 4 et 10 degrés environ par rapport à un plan perpendiculaire à l'axe de rotation (4) du foret (1),
• deux piqûres (27) formant deux faces de coupe secondaires (28) s'étendent depuis l'arête centrale (19) avec un angle de coupe positif (29) compris entre 1 et 7 degrés environ par rapport à l'axe de rotation (4) du foret (1).

2. Foret en matière céramique selon la revendication 1, **caractérisé en ce que** les lèvres (8) et les goujures (9) sont enroulées hélicoïdalement autour de l'axe de rotation (4) du foret (1) avec un angle d'hélice (11) compris entre 20 et 30 degrés environ par rapport à l'axe (4) du foret (1).

3. Foret en matière céramique selon la revendication 2, **caractérisé en ce que** l'angle d'hélice est compris entre 20 et 25 degrés environ.

4. Foret en matière céramique selon l'une des revendications 1 à 3, **caractérisé en ce que** la conicité (26) de la partie taillée (3) est comprise entre 1 et 5 degrés environ.

5. Foret en matière céramique selon la revendication 4, **caractérisé en ce** la conicité (26) de la partie taillée (3) est comprise entre 2 et 4 degrés environ.

6. Foret en matière céramique selon l'une des revendications 1 à 5, **caractérisé en ce que** l'épaisseur (14) de chaque listel (12) est comprise entre 0.2 et 0.8 mm.

7. Foret en matière céramique selon la revendication 6, **caractérisé en ce que** l'épaisseur (14) de chaque listel (12) est comprise entre 0.4 et 0.8 mm.

8. Foret en matière céramique selon l'une des revendications 1 à 7, **caractérisé en ce que** chaque listel a une épaisseur inférieure ou égale au vingtième environ du diamètre externe du foret.

9. Foret en matière céramique selon l'une des revendications 1 à 8, **caractérisé en ce que** l'angle de dépouille est compris entre 6 et 8 degrés par rapport à un plan perpendiculaire à l'axe de rotation (4) du foret (1).

10. Foret en matière céramique selon l'une des revendications 1 à 9, **caractérisé en ce que** chaque face de dépouille est prolongée par une face de contre-dépouille.

11. Foret en matière céramique selon l'une des revendications 1 à 10, **caractérisé en ce que** chaque arête de coupe principale du foret et le bord d'attaque de chaque listel, formant une arête d'intersection entre chaque listel et une face de coupe, sont arrondis avec un rayon compris entre 2 et 40 micromètres environ.

12. Foret en matière céramique selon l'une des revendications 1 à 11, **caractérisé en ce que** les becs du foret comportent un chanfrein de 0,5 millimètre environ à 20 degrés environ par rapport à l'axe du foret.

13. Foret en matière céramique selon l'une des revendications 1 à 12, **caractérisé en ce que** l'angle de pointe du foret correspondant à l'angle formé par les deux arêtes de coupes principales est compris entre 140 et 155 degrés environ.

14. Foret en matière céramique selon l'une des revendications 1 à 13 **caractérisé en ce que** la matière céramique est à base d'oxyde d'alumine, de zircone, de nitrure de silicium ou de céramique mixte.

15. Foret en matière céramique selon l'une des revendications 1 à 14 **caractérisé en ce que** la matière céramique est renforcée par des fibres en carbure de silicium.

16. Foret en matière céramique selon l'une des revendications 1 à 15, **caractérisé en ce que** le foret est destiné au perçage des matériaux réfractaires, tels en particulier que des matériaux aéronautiques à base de nickel et à base de cobalt, et par exemple un inconel 718 de dureté égale à environ 440 Vickers.

17. Procédé de perçage au moyen d'un foret en matière céramique décrit dans l'une des revendications 1 à 16 **caractérisé en ce que** les vitesses de coupe périphérique du foret sont comprises entre 400 et 1000 mètres par minute environ et les vitesses d'avance du foret sont comprises entre 0.04 et 0.1 millimètre par tour.

18. Procédé de perçage selon la revendication 17 **caractérisé en ce que** les vitesses de coupe périphérique du foret sont comprises entre 400 et 600 mètres par minute environ.

19. Procédé de perçage selon la revendication 17 ou 18, **caractérisé en ce que** le perçage est effectué à sec.

20. Procédé de perçage selon l'une des revendications 17 à 19, **caractérisé en ce que** le perçage est une opération d'ébauche ne nécessitant pas de centrage préalable.

21. Procédé de perçage selon l'une des revendications 17 à 20, **caractérisé en ce qu'**une seule opération de perçage est nécessaire pour réaliser le trou final.

22. Procédé de perçage selon l'une des revendications 17 à 21. **caractérisé en ce que** la profondeur de perçage est supérieure au diamètre de la partie taillée du foret.

## Claims

1. A ceramic material drill bit comprising:
• a cylindrical shank (2); and
• a shaped portion (3) extending axially in line with the shank (2) and having a free end (10) forming the tip of the bit, the shaped portion (3) being in the form of a truncated cone whose larger base is situated beside the tip (10) of the bit (1),
the tip (10) comprising two main cutting edges (18) and a central edge (19) between the two main cutting edges (18), the shaped portion (3) comprising two lips (8) and two flutes (9) extending in alternation around the axis of rotation (4) of the bit (1), the lips (8) and the flutes (9) extending from the tip (10) towards the shank (2), each lip (8) including a land (12) and each flute including a main cutting face (16) adjacent to a land (12) and to a main cutting edge (18), at least the shaped portion (3) of the bit (1) being made of ceramic material, the drill bit being **characterized in that**:
• the cutting angle (22) of the bit is positive;
• a relief face (21) extends from each main cutting edge (18) at a relief angle lying in the range 4° to 10° approximately relative to a plane perpendicular to the axis of rotation (4) of the bit (1); and
• two notches (27) forming two secondary cutting faces (28) extend from the central edge (19) with positive cutting angles (29) lying in the range 1° to 7° approximately relative to the axis of rotation (4) of the bit (1).

2. A ceramic material bit according to claim 1, **characterized in that** the lips (8) and the flutes (9) wind helically about the axis of rotation (4) of the bit (1) with a helix angle (11) lying in the range 20° to 30° approximately relative to the axis (4) of the bit (1).

3. A ceramic material bit according to claim 2, **characterized in that** the helix angle lies in the range 20° to 25° approximately.

4. A ceramic material bit according to any one of claims 1 to 3, **characterized in that** the taper angle (26) of the shaped portion (3) lies in the range 1° to 5° approximately.

5. A ceramic material bit according to claim 4, **characterized in that** the taper angle (26) of the shaped portion (3) lies in the range 2 to 4° approximately.

6. A ceramic material bit according to any one of claims 1 to 5, **characterized in that** the width (14) of each land (12) lies in the range 0.2 mm to 0.8 mm.

7. A ceramic material bit according to claim 6, **characterized in that** the width (14) of each land (12) lies in the range 0.4 mm to 0.8 mm.

8. A ceramic material bit according to any one of claims 1 to 7, **characterized in that** each land is of width less than or equal to about one-twentieth of the outside diameter of the bit.

9. A ceramic material bit according to any one of claims 1 to 8, **characterized in that** the relief angle lies in the range 6° to 8° relative to a plane perpendicular to the axis of rotation (4) of the bit (1).

10. A ceramic material bit according to any one of claims 1 to 9, **characterized in that** each relief face is extended by an undercut face.

11. A ceramic material bit according to any one of claims 1 to 10, **characterized in that** each main cutting edge of the bit and the leading edge of each land forming an intersection with each land and a cutting face is rounded with a radius lying in the range 2 µm to 40 µm approximately.

12. A ceramic material bit according to any one of claims 1 to 11, **characterized in that** the angles of the bit include respective chamfers of about 0.5 mm at about 20° relative to the axis of the bit.

13. A ceramic material bit according to any one of claims 1 to 12, **characterized in that** the apex angle of the bit corresponding to the angle formed by the two main cutting edges lies in the range 140° to 155° approximately.

14. A ceramic material bit according to any one of claims 1 to 14, **characterized in that** the ceramic material is based on alumina, on zirconia, on silicon nitride, or on a mixture of ceramics.

15. A ceramic material bit according to any one of claims 1 to 14, **characterized in that** the ceramic material is reinforced by silicon carbide fibers.

16. A ceramic material bit according to any one of claims 1 to 15, **characterized in that** the bit is for drilling refractory materials, such as, in particular, aviation materials based on nickel and based on cobalt, for example an Inconel 718 having a Vickers hardness number of about 440.

17. A method of drilling by means of a ceramic material bit described in any one of claims 1 to 16, **characterized in that** the peripheral cutting speed of the bit lies in the range 400 m/min to 1000 m/min approximately, and the speed of advance of the bit lies in the range 0.04 to 0.1 millimeters per revolution.

18. A drilling method according to claim 17, **characterized in that** the peripheral cutting speed of the bit lies in the range 400 m/min to 600 m/min approximately.

19. A drilling method according to claim 17 or claim 18, **characterized in that** drilling is performed dry.

20. A drilling method according to any one of claims 17 to 19, **characterized in that** drilling is a roughing operation that does not require prior centering.

21. A drilling method according to any one of claims 17 to 20, **characterized in that** a single drilling operation is needed to make the final hole.

22. A drilling method according to any one of claims 17 to 21, **characterized in that** the drilling depth is greater than the diameter of the shaped portion of the bit.

## Patentansprüche

1. Bohrer aus Keramikwerkstoff, welcher aufweist:
- einen zylindrischen Schaft (2),
- einen geschnittenen Teil (3), der sich axial in Verlängerung des Schafts (2) erstreckt und dessen freies Ende (10) den Kopf des Bohrers bildet, wobei der geschnittene Teil kegelstumpfförmig ist, dessen Basis sich auf der Seite des Kopfes (10) des Bohrers (1) befindet,
wobei der Bohrerkopf (10) zwei Hauptschneiden (18) und eine zentrale Schneide (19) zwischen den beiden Hauptschneiden (18) aufweist, wobei der geschnittene Teil (3) zwei Schneidlippen (8) und zwei Nuten (9) aufweist, die sich abwechselnd um die Drehachse (4) des Bohrers (1) herum erstrecken, wobei sich die Schneidlippen (8) und die Nuten (9) vom Bohrerkopf (10) aus zum Schaft (2) des Bohrers hin erstrecken, wobei jede Lippe (8) eine Schneidlippenphase (12) und jede Nut eine Hauptschneidfläche (16) aufweist, die an eine Schneidlippenphase (12) und an eine Hauptschneide (18) angrenzt, wobei mindestens der geschnittene Teil (3) des Bohrers (1) aus Keramikwerkstoff besteht,
**dadurch gekennzeichnet,**
**dass**
- der Schneidwinkel (22) des Bohrers positiv ist,
- sich von jeder Hauptschneide (18) aus eine Freifläche (21) mit einem Freiwinkel, der ca. zwischen 4 und 10 Grad zu einer Ebene beträgt, die im rechten Winkel zur Drehachse (4) des Bohrers (1) liegt, erstreckt,
- sich von der zentralen Schneide (19) aus zwei Vertiefungen (27), die zwei Nebenschneidflächen (28) bilden, mit einem positiven Schneidwinkel (29), der etwa zwischen 1 und 7 Grad zur Drehachse (4) des Bohrers (1) beträgt, erstrecken.

2. Bohrer aus Keramikwerkstoff nach Anspruch 1,
**dadurch gekennzeichnet,**
**dass** die Schneidlippen (8) und die Nuten (9) mit einem Schrägungswinkel (11), der ca. zwischen 20 und 30 Grad zur Drehachse (4) des Bohrers (1) beträgt, schraubenförmig um die Drehachse (4) des Bohrers (1) herum geführt sind.

3. Bohrer aus Keramikwerkstoff nach Anspruch 2,
**dadurch gekennzeichnet,**
**dass** der Schrägungswinkel ca. zwischen 20 und 25 Grad beträgt.

4. Bohrer aus Keramikwerkstoff nach einem der Ansprüche 1 bis 3,
**dadurch gekennzeichnet,**
**dass** die Kegelsteigung (26) des geschnittenen Teils (3) ca. zwischen 1 und 5 Grad beträgt.

5. Bohrer aus Keramikwerkstoff nach Anspruch 4,
**dadurch gekennzeichnet,**
**dass** die Kegelsteigung (26) des geschnittenen Teils (3) ca. zwischen 2 und 4 Grad beträgt.

6. Bohrer aus Keramikwerkstoff nach einem der Ansprüche 1 bis 5,
**dadurch gekennzeichnet,**
**dass** die Stärke (14) jeder Schneidlippenphase (12) zwischen 0,2 und 0,8 mm beträgt.

7. Bohrer aus Keramikwerkstoff nach Anspruch 6,
**dadurch gekennzeichnet,**
**dass** die Stärke (14) jeder Schneidlippenphase (12) zwischen 0,4 und 0,8 mm beträgt.

8. Bohrer aus Keramikwerkstoff nach einem der Ansprüche 1 bis 7,
**dadurch gekennzeichnet,**
**dass** die Stärke jeder Schneidlippenphase kleiner als oder gleich ungefähr dem Zwanzigstel des Außendurchmessers des Bohrers ist.

9. Bohrer aus Keramikwerkstoff nach einem der Ansprüche 1 bis 8,
**dadurch gekennzeichnet,**
**dass** der Freiwinkel zwischen 6 und 8 Grad zu einer Ebene beträgt, die im rechten Winkel zur Drehachse (4) des Bohrers (1) liegt.

10. Bohrer aus Keramikwerkstoff nach einem der Ansprüche 1 bis 9,
**dadurch gekennzeichnet,**
**dass** jede Freifläche durch eine Gegenfreifläche fortgesetzt wird.

11. Bohrer aus Keramikwerkstoff nach einem der Ansprüche 1 bis 10,
**dadurch gekennzeichnet,**
**dass** jede Hauptschneide des Bohrers und die Vorderkante jeder Schneidlippenphase, die eine Verschneidungskante zwischen jeder Schneidlippenphase und einer Schneidfläche bilden, mit einem Radius abgerundet sind, der ungefähr zwischen 2 und 40 Mikrometer beträgt.

12. Bohrer aus Keramikwerkstoff nach einem der Ansprüche 1 bis 11,
**dadurch gekennzeichnet,**
**dass** die Spitzenkanten des Bohrers eine Abschrägung von ungefähr 0,5 Millimetern in einem Winkel von ungefähr 20 Grad zur Achse des Bohrers aufweisen.

13. Bohrer aus Keramikwerkstoff nach einem der Ansprüche 1 bis 12,
**dadurch gekennzeichnet,**
**dass** der Spitzenwinkel des Bohrers, der dem Winkel entspricht, der von den beiden Hauptschneiden gebildet wird, ungefähr zwischen 140 und 155 Grad beträgt.

14. Bohrer aus Keramikwerkstoff nach einem der Ansprüche 1 bis 13,
**dadurch gekennzeichnet,**
**dass** der Keramikwerkstoff auf der Basis von Aluminiumoxid, Zirkon, Siliciumnitrid oder einer Mischkeramik besteht.

15. Bohrer aus Keramikwerkstoff nach einem der Ansprüche 1 bis 14,
**dadurch gekennzeichnet,**
**dass** der Keramikwerkstoff durch Siliciumkortid-Fasern verstärkt ist.

16. Bohrer aus Keramikwerkstoff nach einem der Ansprüche 1 bis 15,
**dadurch gekennzeichnet,**
**dass** der Bohrer zum Bohren von feuerfesten Werkstoffen wie insbesondere Werkstoffen im Flugzeugbau auf Nickelbasis und Kobaltbasis bestimmt ist, und beispielsweise einem Inconel 718 mit einer Härte von ca. 440 Vickers.

17. Verfahren zum Bohren mittels eines Bohrers aus Keramikwerkstoff, wie in einem der Ansprüche 1 bis 16 beschrieben,
**dadurch gekennzeichnet,**
**dass** die Umfangs-Schnittgeschwindigkeiten des Bohrers ungefähr zwischen 400 und 1000 Meter pro Minute betragen und die Vorschubgeschwindigkeiten des Bohrers zwischen 0,04 und 0,1 Millimeter pro Umdrehung betragen.

18. Bohrverfahren nach Anspruch 17,
**dadurch gekennzeichnet,**
**dass** die Umfangs-Schnittgeschwindigkeiten des Bohrers ungefähr zwischen 400 und 600 Meter pro Minute betragen.

19. Bohrverfahren nach Anspruch 17 oder 18,
**dadurch gekennzeichnet,**
**dass** das Bohren trocken ausgeführt wird.

20. Bohrverfahren nach einem der Ansprüche 17 bis 19,
**dadurch gekennzeichnet,**
**dass** das Bohren ein Vorbohren ist, das kein vorheriges Zentrieren erfordert.

21. Bohrverfahren nach einem der Ansprüche 17 bis 20,
**dadurch gekennzeichnet,**
**dass** nur ein einziger Bohrvorgang erforderlich ist, um das endgültige Loch herzustellen.

22. Bohrverfahren nach einem der Ansprüche 17 bis 21,
**dadurch gekennzeichnet,**
**dass** die Bohrtiefe größer ist als der Durchmesser des geschnittenen Teils des Bohrers.
